# EUROPÄISCHE PATENTSCHRIFT

(11) **EP 1 381 830 B1**
(45) Veröffentlichungstag und Bekanntmachung des Hinweises auf die Patenterteilung: **31.03.2021**
(21) Anmeldenummer: 02706751.1
(22) Anmeldetag: 28.02.2002
(51) Int. Cl.: G01F 1/84

(54) **MESSWANDLER VOM VIBRATIONSTYP**
VIBRATION-TYPE MEASURING TRANSFORMER
TRANSDUCTEUR DE MESURE DE TYPE VIBRATOIRE

(30) Priorität: 24.04.2001 EP 01109977
(43) Veröffentlichungstag der Anmeldung: 21.01.2004
(73) Patentinhaber: Endress + Hauser Flowtec AG, 4153 Reinach BL 1 (CH)
(72) Erfinder: RIEDER, Alfred, 84034 Landshut (DE); DRAHM, Wolfgang, 85435 Erding (DE)
(74) Vertreter: Andres, Angelika Maria
(86) Internationale Anmeldenummer: PCT/EP2002/002157
(87) Internationale Veröffentlichungsnummer: WO 2002/086426

(56) Entgegenhaltungen:
- EP-A- 0 317 340
- WO-A-00/14485
- US-A- 5 945 609
- US-A- 5 969 265

## Beschreibung

Die Erfindung betrifft einen, insb. für eine Verwendung in einem Coriolis-Massedurchflußmesser geeigneten, Meßwandler vom Vibrationstyp.

Zur Ermittlung eines Massedurchflusses eines in einer Rohrleitung strömenden Fluids, insb. einer Flüssigkeit, werden oftmals solche Meßgeräte verwendet, die mittels eines Meßwandlers vom Vibrationstyp und einer daran angeschlossenen Steuer- und Auswerteelektronik, im Fluid Corioliskräfte bewirken und von diesen abgeleitet ein den Massedurchfluß repräsentierendes Meßsignal erzeugen.

Solche Coriolis-Massedurchflußmesser sind seit langem bekannt und im industriellen Einsatz. So sind z.B. in der EP-A 317 340, der US-A 53 98 554, der US-A 54 76 013, der US-A 55 31 126, der US-A 56 91 485, US-A 57 05 754, der US-A 57 96 012, der US-A 59 45 609, der US-A 59 69 265, der US-A 59 79 246, der WO-A 99 51 946, WO-A 99 40 394 oder der WO-A 00 14 485 Coriolis-Massedurchflußmesser mit jeweils einem Meßwandler vom Vibrationstyp beschrieben, welcher Meßwandler auf einen Massedurchfluß eines in einer Rohrleitung strömenden Fluids reagiert und welcher Meßwandler umfaßt:
- ein einziges gerades, im Betrieb vibrierendes Meßrohr zum Führen des Fluids, welches Meßrohr über ein einlaßseitig einmündendes Einlaßrohrstück und über ein auslaßseitig einmündendes Auslaßrohrstück mit der Rohrleitung kommuniziert, sowie
- eine Erregeranordnung, die das Meßrohr im Betrieb zu Biegeschwingungen in einer Rohrebene anregt
- eine Sensoranordnung zum punktuellen Erfassen einlaßseitiger und auslaßseitiger Schwingungen des Meßrohrs.

Gerade Meßrohre bewirken bekanntlich, zu Biegeschwingungen gemäß einer ersten Eigenschwingungsform angeregt, im hindurchströmenden Fluid Corioliskräfte. Diese wiederum führen dazu, daß den angeregten Biegeschwingungen koplanare Biegeschwingungen gemäß einer zweiten Eigenschwingungsform von höherer und/oder niederer Ordnung überlagert
werden und dementsprechend die mittels der Sensoranordnung einlaßseitig und auslaßseitig erfaßten Schwingungen eine auch vom Massedurchfluß abhängige, meßbare Phasendifferenz aufweisen.

Üblicherweise werden die Meßrohre derartiger, z.B. in Coriolis-Massedurchflußmessern eingesetzten, Meßwandler im Betrieb auf einer momentanen Resonanzfrequenz der ersten Eigenschwingungsform, insb. bei konstantgeregelter Schwingungsamplitude, angeregt. Da diese Resonanzfrequenz insb. auch von der momentanen Dichte des Fluids abhängig ist, kann mittels marktüblicher Coriolis-Massedurchflußmesser neben dem Massedurchfluß auch die Dichte von strömenden Fluiden gemessen werden.

Ein Vorteil gerader Meßrohre besteht z.B. darin, daß sie praktisch in jeder beliebigen Einbaulage, insb. auch nach einer in-line durchgeführten Reinigung, mit hoher Sicherheit rückstandslos entleert werden können. Ferner sind solche Meßrohre im Vergleich z.B. zu einem omegaförmig oder helixförmig gebogenem Meßrohr wesentlich einfacher und dementsprechend kostengünstiger herzustellen. Ein weiterer Vorteil eines in der oben beschriebenen Weise vibrierenden, geraden Meßrohrs ist im Vergleich zu gebogenen Meßrohren z.B. auch darin zu sehen, daß im Meßbetrieb via Meßrohr praktisch keine Torsionsschwingungen in der angeschlossenen Rohrleitung hervorgerufen werden.

Demgegenüber besteht ein wesentlicher Nachteil vorbeschriebener Meßwandler darin, daß aufgrund wechselseitiger lateraler Auslenkungen des vibrierenden einzigen Meßrohrs gleichfrequent oszillierende Querkräfte auf die Rohrleitung wirken können und daß diese Querkräfte bisher nur sehr begrenzt und nur mit einem sehr hohen technischen Aufwand kompensiert werden können.

Zur Verbesserung der dynamischen Balance des Meßwandlers, insb. zur Reduzierung solcher durch das vibrierende einzige Meßrohr erzeugten, einlaßseitig und auslaßseitig auf die Rohrleitung einwirkenden Querkräften, umfassen die in der EP-A 317 340, der US-A 53 98 554, der US-A 55 31 126, der US-A 56 91 485, der US-A 57 96 012, der US-A 59 69 265, der US-A 59 79 246 oder der WO-A 00 14 485 gezeigten Meßwandler jeweils wenigstens einen einstückigen oder mehrteilig ausgeführten Gegenschwinger, der jeweils einlaßseitig und auslaßseitig am Meßrohr fixiert ist. Derartige balkenförmig, insb. rohrförmig, oder als mit dem Meßrohr fluchtendes Körperpendel realisierte Gegenschwinger schwingen im Betrieb zum jeweiligen Meßrohr außer Phase, insb. gegenphasig, wodurch die Wirkung der durch Meßrohr und Gegenschwinger jeweils hervorgerufenen seitlichen Querkräfte auf die Rohrleitung minimiert und ggf. auch völlig unterdrückt werden können.

Derartige Meßwandler mit Gegenschwinger haben sich insb. bei solchen Anwendungen bewährt, bei denen das zu messende Fluid eine im wesentlich konstante oder nur in einem sehr geringen Maße veränderliche Dichte aufweist, also bei solchen Anwendungen, bei denen eine auf die angeschlossene Rohrleitung wirkende Resultierende aus den vom Meßrohr erzeugten Querkräften und vom Gegenschwinger erzeugten Gegenkräften vorab ohne weiteres auf Null fest eingestellt werden kann.

Demgegenüber weist ein derartiger Meßwandler, insb. gemäß der US-A 55 31 126 oder der US-A 59 69 265, bei Anwendung für Fluiden mit in einem weiten Bereich schwankender Dichte, z.B. verschiedenen, aufeinanderfolgend zu messenden Fluiden, wenn auch in geringerem Maße, praktisch den gleichen Nachteil wie ein Meßwandler ohne Gegenschwinger auf, da vorgenannte Resultierende auch von der Dichte des Fluids abhängig sind und somit in erheblichem Maße von Null verschieden sein können. Anders gesagt, auch ein aus Meßrohr und Gegenschwinger bestehendes Gesamtsystem wird im Betrieb aufgrund von dichteabhängigen Unbalancen und damit einhergehenden Querkräften aus einer zugewiesenen statischen Ruhelage global ausgelenkt.

Eine Möglichkeit zur Reduzierung der dichteabhängigen Querkräfte ist z.B. in der US-A 59 79 246, in der US-A 59 69 265, in der WO-A 99 40 394 oder in der WO-A 00 14 485 vorgeschlagen. Insbesondere ist in der WO-A 00 14 485 ein Meßwandler vom Vibrationstyp für ein in einer Rohrleitung strömendes Fluid beschrieben, welcher Meßwandler umfaßt:
- ein im Betrieb vibrierendes Meßrohr zum Führen des Fluids,
   -- wobei das Meßrohr über ein einlaßseitig einmündendes Einlaßrohrstück und über ein auslaßseitig einmündendes Auslaßrohrstück mit der Rohrleitung kommuniziert und
   -- wobei aufgrund von im vibrierenden Meßrohr erzeugten Querkräften dieses zumindest zeitweise aus einer zugewiesenen statischen Ruhelage lateral verschoben ist und somit im Meßwandler Querimpulse auftreten,
- eine Erregeranordnung zum Antreiben des Meßrohrs,
- eine Sensoranordnung zum Erfassen von Schwingungen des Meßrohrs,
- einen am Einlaßrohrstück fixierten ersten Teil-Gegenschwinger und einen am Auslaßrohrstück fixierten zweiten Teil-Gegenschwinger zum Erzeugen von Ausgleichs-Schwingungen,
- wobei die Ausgleichs-Schwingungen so ausgebildet sind, daß die Querimpulse kompensiert werden und somit ein Massenmittelpunkt eines aus Meßrohr, Erregeranordnung, Sensoranordnung und den beiden Auslegern gebildeten Schwingungssystems ortsfest gehalten wird.

Ferner ist in der WO-A 99 40 394 ein Meßwandler vom Vibrationstyp für ein in einer Rohrleitung strömendes Fluid beschrieben, welcher Meßwandler umfaßt:
- ein im Betrieb vibrierendes Meßrohr zum Führen des Fluids,
   -- wobei das Meßrohr über ein einlaßseitig einmündendes Einlaßrohrstück und über ein auslaßseitig einmündendes Auslaßrohrstück mit der Rohrleitung kommuniziert und
- einen einlaßseitig und auslaßseitig am Meßrohr fixierten Gegenschwinger,
   -- wobei im vibrierenden Meßrohr und im Gegenschwinger Querkräften erzeugt werden,
- ein am Einlaßrohrstück und am Auslaßrohrstück fixiertes Wandlergehäuse,
- eine Erregeranordnung zum Antreiben des Meßrohrs,
- eine Sensoranordnung zum Erfassen von Schwingungen des Meßrohrs,
- einen am Einlaßrohrstück und am Wandlergehäuse fixierten ersten Ausleger zum Erzeugen von den Querkräften einlaßseitig entgegenwirkenden Gegenkräften und
- einen am Auslaßrohrstück und am Wandlergehäuse fixierten zweiten Ausleger zum Erzeugen von den Querkräften auslaßseitig entgegenwirkenden Gegenkräften,
- wobei die Gegenkräfte so ausgebildet sind, daß das Meßrohr trotz der erzeugten Querkräften in einer zugewiesenen statischen Ruhelage festgehalten wird.

Bei vorgenannten Meßwandlern, einschließlich den in der US-A 59 79 246 beschriebenen, wird das Problem von dichteabhängigen Unbalancen im Prinzip dadurch gelöst, daß ein Amplitudengang des Gegenschwingers, insb. durch amplitudenabhängig veränderliche Federsteifigkeiten des Gegenschwingers, vorab und/oder im Betrieb derart an die Meßrohrschwingungen angepaßt wird, daß die von Meßrohr und Gegenschwinger erzeugten Kräfte einander kompensieren.

Ein andere Möglichkeit zur Reduzierung von dichteabhängigen Querkräften ist z.B. in der US-A 52 87 754, der US-A 57 05 754 oder der US-A 57 96 010 beschrieben. Bei dort gezeigten Meßwandlern werden die seitens des vibrierenden einzigen Meßrohrs erzeugten, eher mittel- oder hochfrequent oszillierenden Querkräfte mittels eines im Vergleich zum Meßrohr sehr schweren Gegenschwingers und ggf. einer relativ weichen Ankopplung des Meßrohrs an die Rohrleitung, also praktisch mittels eines mechanischen Tiefpasses, von der Rohrleitung, fern gehalten. Ein großer Nachteil eines solchen Meßwandlers besteht u.a. aber darin, daß die zur Erzielung einer ausreichend robusten Dämpfung erforderliche Masse des Gegenschwingers überproportional mit Nennweite des Meßrohrs steigt. Eine Verwendung solch massiger Bauteile bedeutet einerseits stets einen erhöhten Montageaufwand sowohl bei der Fertigung als auch beim Einbau des Meßgeräts in die Rohrleitung. Andererseits ist hierbei stets sicherzustellen, daß eine mit zunehmender Masse immer niedriger werdende minimale Eigenfrequenz des Meßwandlers nach wie vor weitab von den ebenfalls sehr niedrigen Eigenfrequenzen der angeschlossenen Rohrleitung liegt. Somit ist eine Verwendung eines derartigen Meßwandlers in industriell, insb. für Messungen von Flüssigkeiten, einsetzbaren Coriolis-Massedurchflußmessern oder auch Coriolis-Massedurchfluß/Dichtemessern eher auf relativ geringe Nennweiten von kleiner gleich 10 mm begrenzt.

Ein Aufgabe der Erfindung besteht daher darin, einen, insb. für einen Coriolis-Massedurchflußmesser oder auch für einen Coriolis-Massedurchfluß/ Dichtemesser geeigneten, Meßwandler anzugeben, der, auch bei einer Verwendung nur eines einzigen, insb. geraden, Meßrohrs, im Betrieb über einen weiten Fluiddichtebereich dynamisch gut ausbalanciert ist und der trotzdem von vergleichsweise geringer Masse ist.

Zur Lösung der Aufgabe besteht die Erfindung in einem Meßwandler vom Vibrationstyp gemäß Anspruch 1.

Nach einer bevorzugten ersten Ausgestaltung der Erfindung weisen
- der erste Ausleger
   -- einen am Einlaßrohrstück starr fixierten Auslegerarm und
   -- eine daran gehalterte Auslegermasse
- und der zweite Ausleger
   -- einen am Auslaßrohrstück starr fixierten Auslegerarm und
   -- eine daran gehalterte Auslegermasse auf

Nach einer bevorzugten zweiten Ausgestaltung der Erfindung ist jeder der beiden Ausleger mindestens so schwer wie das Meßrohr. Nach einer bevorzugten dritten Ausgestaltung der Erfindung sind in den Gegenschwinger Nuten eingeformt.

Nach einer bevorzugten vierten Ausgestaltung der Erfindung sind die Zusatzmassen ringförmig am Gegenschwinger und koaxial zu diesem angeordnet.

Ferner besteht die Erfindung auch in einem Verfahren gemäß Anspruch 8.

Ein Grundgedanke der Erfindung ist es, eher störend auf die Messungen und/oder die angeschlossene Rohrleitung wirkende laterale Verschiebebewegungen des vibrierenden Meßrohrs, die dessen primären, die Meßeffekte bewirkenden Verformungen überlagert sind, in den Meßwandler dynamisch ausbalancierende, gegenläufige Verformungen des Ein- und Auslaßrohrstücks umzuwandeln.

Ein Vorteil der Erfindung besteht darin, daß der Meßwandler zum einen trotz allfälliger, betriebsbedingter Schwankungen der inneren Massenverteilung, also auch unabhängig von der Fluiddichte, und zwar lediglich aufgrund seiner mittels Ausleger erzwungenen inneren geometrischen Ausprägung sehr gut ausbalanciert ist, wodurch innere Querimpulse und Querkräfte von der angeschlossenen Rohrleitung weitgehend fern gehalten werden können. Zum anderen wirken auch die dazu erforderlichen, inneren Verformungskräfte im wesentlichen nicht über den Meßwandler hinaus, insb. ebenfalls nicht auf die Rohrleitung.

Der erfindungsgemäße Meßwandler zeichnet sich des weiteren dadurch aus, daß er aufgrund der dynamischen Schwingungsentkopplung zum einen sehr kompakt und zum anderen sehr leicht ausgeführt werden kann. Es hat sich hierbei gezeigt, daß ein derartiger Meßwandler z.B. gegenüber einem Meßwandler, dessen innere Querkräfte in vergleichbarer Güte mittels des oben erwähnten mechanischen Tiefpaßsystems kompensiert werden, eine um mehr als 25% niedrigere Masse aufweisen kann. Daher ist der Meßwandler insb auch für die Messung in Rohrleitungen großer Nennweite, z.B. > 80 mm, geeignet.

Nachfolgend werden die Erfindung und weitere Vorteile anhand eines Ausführungsbeispiels erläutert, das in den Figuren der Zeichnung dargestellt ist. Gleiche Teile sind in den Figuren mit gleichen Bezugszeichen versehen. Falls es der Übersichtlichkeit dienlich ist, wird auf bereits erwähnte Bezugszeichen in nachfolgenden Figuren verzichtet.
- Fig. 1: zeigt teilweise geschnitten einen Meßwandler vom Vibrations-Typ mit einem Meßrohr in einer Seitenansicht,
- Fig. 2: zeigt teilweise geschnitten eine Ausgestaltung eines Meßwandlers gemäß Fig. 1,
- Fign. 3: a bis d zeigen schematisch Biegelinien des Meßrohrs und eines Gegenschwingers im Betrieb des Meßwandlers von Fig. 1 oder 2 und
- Fig. 4: zeigt schematisch einen Auschnitt des Meßrohrs im Betrieb eines Meßwandlers gemäß Fig. 1 oder 2.

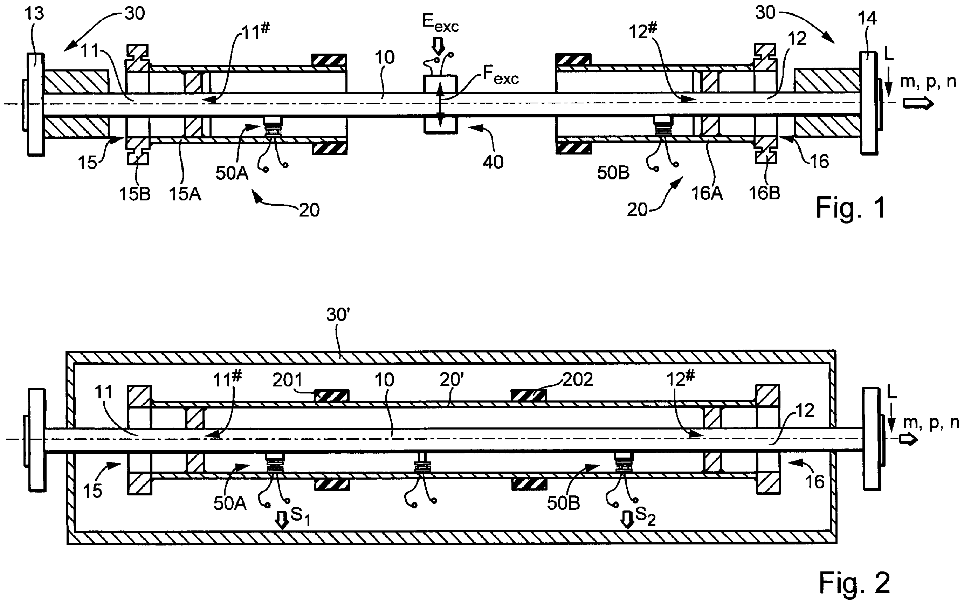

In den Fig. 1 und 2 ist ein Meßwandler vom Vibrationstyp schematisch dargestellt. Der Meßwandier dient dazu, in einem hindurchströmenden Fluid mechanische Reaktionskräfte, z.B. massedurchflußabhängige Coriolis-Kräfte, dichteabhängige Trägheitskräfte und/oder viskositätsabhängige Reibungskräfte, zu erzeugen, die meßbar, insb. sensorisch erfaßbar, auf den Meßwandler zurückwirken. Abgeleitet von diesen Reaktionskräften können so In der dem Fachmann bekannten Weise z.B. ein Massedurchfluß *m*, eine Dichte *ρ* und/oder eine Viskosität *η* des Fluids gemessen werden.

Zum Führen des Fluids umfaßt Meßwandler ein, insb. einziges, im wesentlichen gerades Meßrohr 10, das im Betrieb, um eine statische Ruhelage oszillierend, praktisch wiederholt elastisch verformt wird.

Dazu ist das Meßrohr 10 in einem einlaßseitig und auslaßseitig an diesem in geeigneter Weise fixierten ersten Tragsystem 20 schwingfähig gelagert. Als

Tragsystem 20 können z.B. ein Tragrahmen oder ein Tragrohr dienen. Weitere bevorzugte Ausgestaltungen des Tragsystems 20 werden weiter unten noch näher erläutert.

Zum Hindurchströmenlassen des Fluids ist das Meßrohr 10 über ein einlaßseitig einmündendes Einlaßrohrstück 11 und über ein auslaßseitig einmündendes Auslaßrohrstück 12 an eine das Fluid zu- bzw. abführende, hier nicht dargestellte, Rohrleitung angeschlossen. Meßrohr 10, Einlaß- und Auslaßrohrstück 11, 12 sind, zueinander und zu einer imaginären Längsachse L fluchtend ausgerichtet, in vorteilhafter Weise einstückig ausgeführt, so daß zu deren Herstellung z.B. ein einziges rohrförmiges Halbzeug dienen kann; falls erforderlich können Meßrohr 10 und Rohrstücke 11, 12 aber auch mittels einzelner, nachträglich zusammengefügter, z.B. zusammengeschweißter, Halbzeuge hergestellt werden. Zur Herstellung des Meßrohrs 10 kann hierbei praktisch jedes der für solche Meßwandler üblichen Materialien, wie z.B. Stahl, Titan, Zirkonium etc., verwendet werden.

Für den Fall, daß der Meßwandler lösbaren mit der Rohrleitung zu montieren ist, ist dem Einlaßrohrstück 11 und dem Auslaßrohrstück 12 bevorzugt jeweils ein erster bzw. zweiter Flansch 13, 14 angeformt; falls erforderlich können Ein- und Auslaßrohrstück 11, 12 aber auch direkt mit der Rohrleitung, z.B. mittels Schweißen oder Hartlötung, verbunden werden.

Ferner kann, wie in den Fig. 1 schematisch dargestellt, am Ein- und am Auslaßrohrstück 11, 12, ein, zweites Tragsystem 30 fixiert sein, das, bevorzugt auch als das Meßrohr 10 aufnehmendes Wandlergehäuse 30' ausgestaltet sein kann, vgl. Fig. 1.

Im Betrieb des Meßwandlers wird das Meßrohr 10 zu Biegeschwingungen, insb. im Bereich einer natürlichen Resonanzfrequenz, so angeregt, daß es sich in diesem sogenannten Nutzmode im wesentlichen gemäß einer natürlichen ersten Eigenschwingungsform ausbiegt.

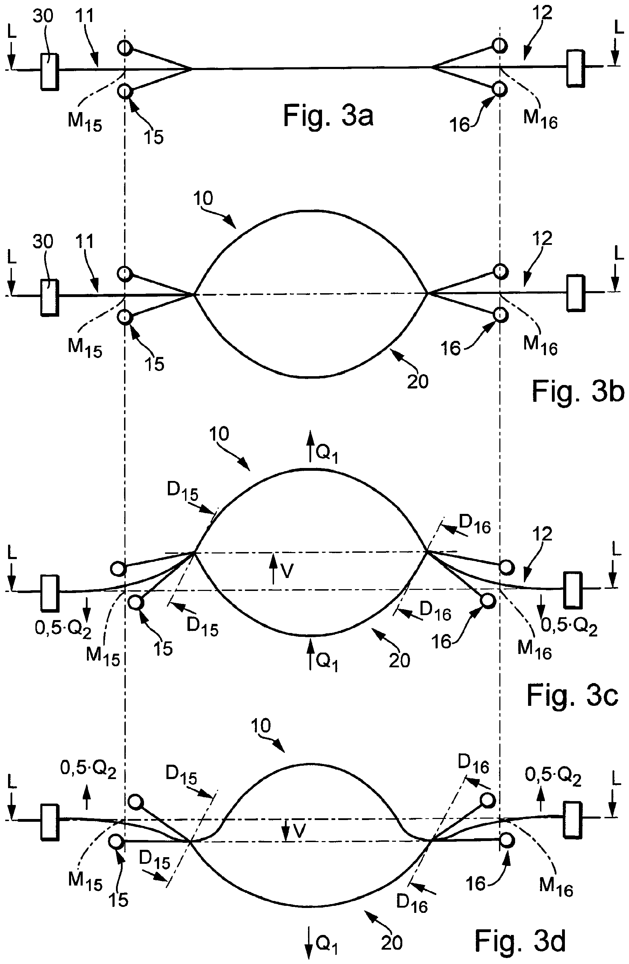

Nach einer bevorzugten Ausgestaltung der Erfindung, wird das Meßrohr 10 dazu im Betrieb 10 mit einer Schwingungsfrequenz angeregt, die möglichst genau einer natürlichen Resonanzfrequenz des sogenannten *f1*-Eigenmodes des Meßrohrs 10 entspricht, also einem symmetrischen Eigenmode bei dem, wie in Fig. 3 schematisch dargestellt, das vibrierende, jedoch nicht vom Fluid durchströmte Meßrohr 10 einen einzigen Schwingungsbauch aufweist. Beispielsweise liegt die Resonanzfrequenz des *f1*-Eigenmodes bei einem als Meßrohr 10 dienenden Edelstahlrohr mit einer Nennweite von 20 mm, einer Wandstärke von etwa 1,2 mm und einer Länge von etwa 350 mm, in etwa bei 850 Hz bis 900 Hz.

Für den Fall, daß das Fluid in der Rohrleitung strömt und somit der Massedurchfluß m von Null verschieden ist, werden mittels des in oben beschriebener Weise vibrierenden Meßrohrs 10 im hindurchströmenden Fluid Corioliskräfte induziert. Diese wiederum wirken auf das Meßrohr 10 zurück und bewirken so eine zusätzliche, sensorisch erfaßbare, hier jedoch nicht dargestellte, Verformung des Meßrohrs 10 gemäß einer natürlichen zweiten Eigenschwingungsform, die dem angeregten Nutzmode koplanar überlagert ist. Die momentane Ausprägung der Verformung des Meßrohrs 10 ist dabei, insb. hinsichtlich ihrer Amplituden, auch vom momentanen Massedurchfluß *m* abhängig. Als zweite Eigenschwingungsform, dem sogenannten Coriolismode, kann, wie bei derartigen Meßwandlern üblich, z.B. die Eigenschwingungsform des antisymmetrischen *f2*-Eigenmodes, also jene mit zwei Schwingungsbäuchen und/oder die Eigenschwingungsform des antisymmetrischen *f4*-Eigenmodes mit vier Schwingungsbäuchen dienen.

Bei einer Anregung des Nutzmodes werden im in der oben beschriebenen Weise vibrierenden, einzigen Meßrohrs 10 aufgrund von mit den Biegeschwingungen einhergehenden Massenbeschleunigungen bekanntlich Querkräfte *Qₜ*, erzeugt; somit treten im Meßwandler in entsprechender Weise auch lateral ausgerichtete Querimpulse auf. Beispielsweise würde sich bei einer Schwingungsamplitude von ca. 0,03 mm für das oben erwähnte Edelstahl-Meßrohr eine Querkraft von etwa 100 N ergeben.

Für den Fall, daß diese Querkräfte *Q₁* nicht kompensiert werden, verbleibt praktisch ein Querimpuls im Meßwandler, was wiederum dazu führt, daß das am Einlaßrohrstück 11 und am Auslaßrohrstück 12 aufgängte Meßrohr 10 zusammen mit dem daran fixierten ersten Tragsystem 20 lateral aus der zugewiesenen statischen Ruhelage verschoben wird. Dementsprechend würden die Querkräfte

*Q₁* via Einlaß- und Auslaßrohrstück 11, 12 zumindest teilweise auch auf die angeschlossene Rohrleitung wirken und diese somit gleichfalls vibrieren lassen.

Zur Minimierung solcher, auf die Rohrleitung wirkenden, oszillierenden Querkräfte *Q₁* ist das erste Tragsystem 20 nach einer bevorzugten Ausgestaltung der Erfindung als ein zum Meßrohr 10 außerphasig, insb. gegenphasig, vibrierender und daher bevorzugt biege-elastischer Gegenschwinger 20' realisiert.

Der Gegenschwinger 20' dient dazu, den Meßwandler für genau einen vorherbestimmten, z.B. einen im Betrieb des Meßwandlers am häufigsten zu erwartenden oder auch kritischen Fluiddichtewert soweit dynamisch auszubalancieren, daß die im vibrierenden Meßrohr 10 erzeugten Querkräfte *Q₁* möglichst vollständig kompensiert werden und letzteres dann seine statische Ruhelage praktisch nicht verläßt, vgl. Fig. 3a, 3b. Dementsprechend wird der Gegenschwinger 20', wie in Fig. 3b schematisch dargestellt, im Betrieb des Meßwandlers ebenfalls zu Biegeschwingungen angeregt, die im wesentlichen koplanar zu den Biegeschwingungen des Meßrohrs 10 ausgebildet sind.

Der Gegenschwinger 20' ist dazu, wie in der Fig. 1 dargestellt, bevorzugt rohrförmig, insb. koaxial zum Meßrohr 10 ausgerichtet, ausgeführt. Falls erforderlich, kann der Gegenschwinger 20' auch, wie z.B. auch in der US-A 59 69 265, der EP-A 317 340 oder der WO-A 00 14 485 gezeigt, mehrteilig zusammengesetzt oder mittels zweier separater, einlaß- bzw. auslaßseitig am Meßrohr 10 fixierter Teil-Gegenschwinger realisiert sein, vgl. Fig. 2. Insbesondere für den letzteren Fall, da das innere Tragsystem 20 mittels eines einlaßseitigen und eines auslaßseitigen Teil-Gegenschwingers gebildet ist, kann das äußere Tragsystem 30 ebenfalls mehrteilig mit einem einlaßseitigen und einem auslaßseitigen Teilsystem ausgeführt sein, vgl. Fig. 2.

Um ein möglichst einfach handhabbares Abstimmen des Gegenschwingers 20' auf den erwähnten Fluiddichtewert und die dann tatsächlich angeregte Schwingungsform des Meßrohrs 10 zu ermöglichen, sind nach einer bevorzugten Ausgestaltung der Erfindung dem Gegenschwinger 20' diskrete erste und zweite Massenstücke 201, 202, insb. lösbar, aufgesetzt. Die Massenstücke 201, 202 können z.B. auf entsprechende, von außen am Meßrohr fixierte Stehbolzen aufgeschraubte Scheiben oder auf das Meßrohr 10 aufgeschobene kurze Rohrstücke sein. Ferner kann eine entsprechende Massenverteilung über dem Gegenschwinger 20' z.B. auch durch Ausformen von Längs- oder Ringnuten realisiert werden. Eine für die jeweilige Anwendung geeignete Masseverteilung kann in der dem Fachmann bekannten Weise vorab z.B. mittels Finite-Elemente-Berechnungen und/oder mittels entsprechender Kalibriermessungen ohne weiteres ermittelt werden. Falls erforderlich, können selbstverständlich auch mehr als die genannten zwei Massenstücke 201, 202 verwendet werden. Es sei an dieser Stelle erwähnt, daß beide Tragsysteme 20, 30, jedenfalls aber der Gegenschwinger 20' und das Wandlergehäuse 30', wie z.B. in der WO-A 99 51 946 oder der EP-A 1 150 104 vorgeschlagen, nachträglich auf eine bereits vorhandene Rohrleitung von außen aufgesetzt werden kann.

Zum Erzeugen mechanischer Schwingungen des Meßrohrs 10 umfaßt der Meßwandler ferner eine, insb. elektrodynamische, Erregeranordnung 40. Diese dient dazu, eine von einer, hier nicht dargestellten, Steuer-Elektronik eingespeiste, elektrische Erregerenergie *E_{exc}*, z.B. mit einem geregelten Strom und/oder einer geregelten Spannung, in eine auf das Meßrohr 10, z.B. pulsförmig oder harmonisch, einwirkende und dieses in der vorbeschriebenen Weise elastisch verformende Erregerkraft *F_{exc}* umzuwandeln. Die Erregerkraft *F_{exc}* kann hierbei, wie in Fig. 1 schematisch dargestellt, bidirektional oder aber auch unidirektional ausgebildet sein und in der dem Fachmann bekannten Weise z.B. mittels einer Strom-und/oder Spannungs-Regelschaltung, hinsichtlich ihrer Amplitude und, z.B. mittels einer Phasen-Regelschleife, hinsichtlich ihrer Frequenz eingestellt werden. Als Erregeranordnung kann z.B. eine einfache Tauchspulenanordnung mit einer am Gegenschwinger 20' befestigten zylindrischen Erregerspule, die im Betrieb von einem entsprechenden Erregerstrom durchflossen ist, und mit einem in die Erregerspule zumindest teilweise eintauchenden dauermagnetischen Anker, der von außen, insb. mittig, am Meßrohr 10 fixiert ist, dienen. Ferner kann die Erregeranordnung 40 z.B. auch als ein Elektromagnet oder, wie z.B. in der WO-A 99 51 946 gezeigt, als ein seismischer Erreger realisiert sein.

Zum Detektieren von Schwingungen des Meßrohr 10 kann z.B. eine für derartige Meßwandler übliche Sensoranordnung verwendet werden, bei der in der dem Fachmann bekannten Weise mittels eines einlaßßseitigen ersten Sensors 50A und mittels eines auslaßseitigen zweiten Sensors 50B die Bewegungen des Meßrohrs 10 erfaßt und in ein entsprechendes erstes bzw. zweites Sensorsignal S₁, S₂ umgewandelt werden. Als Sensoren 50A, 50B können z.B., wie in Fig. 1 schematisch dargestellt, die Schwingungen relativ messende, elektrodynamische Geschwindigkeitssensoren oder aber elektrodynamische Wegsensoren oder Beschleunigungssensoren verwendet werden. Anstelle elektrodynamischer Sensoranordnungen können ferner auch mittels resistiver oder piezo-elektrischer Dehnungsmeßstreifen messende oder opto-elektronische Sensoranordnungen zum Detektieren der Schwingungen des Meßrohrs 10 dienen.

Wie bereits mehrfach erwähnt, kann das Meßrohr 10 auch mittels des Gegenschwingers 20', praktisch nur für einen einzigen Fluiddichtewert, bestenfalls aber für einen sehr schmalen Fluiddichtebereich dynamisch ausbalanciert werden, vgl. Fig. 3b. Vielmehr aber wird das Meßrohr 10 bei schwankender Dichte ρ aus der Ruhelage, in den Fig. 3a bis d symbolisiert durch die Längsachse L, lateral verschoben werden, und zwar bei hoher
Dichte ρ oberhalb des erwähnten Fluiddichtewerts, wie in der Fig. 3c schematisch dargestellt, in Richtung seiner eigenen Schwingungsbewegung oder bei niedriger Dichte ρ unterhalb des Fluiddichtewertes, wie in der Fig. 3d gezeigt, in Richtung der Schwingungsbewegung des z.B. als Gegenschwingers 20' ausgeführten inneren Tragsystems 20.

Zur verbesserten dynamischen Ausbalancierung des Meßwandlers, insb. auch bei Fluiden mit signifikant schwankender Dichte p, umfaßt dieser ferner einen am Einlaßrohrstück 11 möglichst starr fixierten ersten Ausleger 15 und einen am Auslaßrohrstück 12 möglichst starr fixierten, insb. zum Ausleger 15 identisch geformten, zweiten Ausleger 16.

Die beiden, insb. symmetrisch zur Mitte des Meßrohrs 10 angeordneten, Ausleger 15, 16 dienen erfindungsgemäß dazu, im Einlaßrohrstück 11 bzw. im Auslaßrohrstück 12, insb. auch in der Nähe des angrenzenden Meßrohrs 10, dynamisch Biegemomente zu erzeugen, wenn das in der beschriebenen Weise vibrierende Meßrohr 10 ggf. zusammen mit dem Gegenschwinger 20' aus seiner statischen Ruhelage lateral verschoben wird. Dazu sind der Ausleger 15 an einem dem Meßrohr 10 zugewandten Auslaßende 11^{#} des Einlaßrohrstücks 11 und der Ausleger 16 an einem dem Meßrohr 10 zugewandten Einlaßende 12^{#} des Auslaßrohrstücks 12 form- und/oder kraftschlüssig verbunden, z.B. angeschweißt oder aufgeklemmt.

Die beiden Ausleger 15, 16 sind, wie in den Fig. 1 und 2 schematisch dargestellt, so, bevorzugt möglichst nah zum Meßrohr 10 hin, im Meßwandler angeordnet, daß ein Masseschwerpunkt M₁₅ des Auslegers 15 bzw. ein Masseschwerpunkt M₁₆ des Auslegers 16 vom Meßrohr 10, insb. in dessen Flucht liegend, beabstandet ist. Auf diese Weise werden mittels der Ausleger 15, 16 exzentrisch, also nicht im zugehörigen Massenschwerpunkt M₁₅ bzw. M₁₆, an der jeweiligen Fixierstelle, nämlich dem Auslaßende 11^{#} bzw. dem Einlaßende 12^{#}, angreifende Massenträgheitsmomente geschaffen. Diese wiederum erzwingen, aufgrund lateraler Verschiebebewegungen *V* des Meßrohrs 10 um den jeweiligen, praktisch ruhenden Massenschwerpunkt M₁₅ bzw. M₁₆ pendelnd, eine zusätzliche Verdrehung von Einlaß- bzw. Auslaßende 12^{#}, 11^{#} um eine zu dieser lateralen Verschiebebewegung *V* sowie zur Längsachse L senkrechten imaginären ersten bzw. um eine zur ersten im wesentlichen parallelen zweiten Drehachse D₁₅, D₁₆, vgl. Fig. 3c und d.

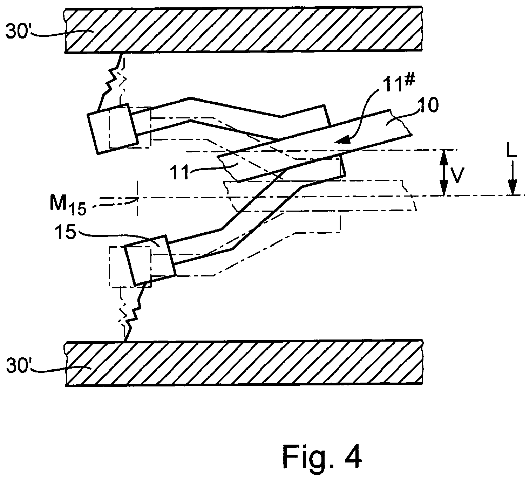

Diese, in Fig. 4 nochmals vergrößert dargestellte, Verdrehung seines Auslaßendes 11^{#} wiederum bewirkt zumindest abschnittsweise eine zusätzliche, zur Verschiebebewegung *V* des Meßrohrs 10 gegenläufige Verbiegung des Einlaßrohrstücks 11, die praktisch einer einachsigen, querkraftfreien und somit weitgehend schubspannungsfreien Biegung entspricht; in analoger Weise wird das Auslaßrohrstück 12 ebenfalls gegenläufig zur Verschiebebewegung *V* gebogen.

Diese Verbiegungen von Ein- bzw. Auslaßrohrstück 11, 12 können nach den Erkenntnissen der Erfinder nunmehr, z.B. mittels computergestützter Simulationsberechnungen oder mittels experimenteller Messungen, dahingehend optimiert werden, daß durch die Verbiegung erzeugte Gegenkräfte *Q*₂ die oben erwähnten Querkräfte *Q₁* im vibrierenden Meßrohr 10 vollständig oder zumindest teilweise kompensiert werden, und zwar so, daß am äußeren Tragsystem 30 und somit auch an der angeschlossenenen Rohrleitung praktisch keine durch das vibrierende Meßrohr 10 und das ggf. ebenfalls vibrierende innere Tragsystem 20 verursachten Querkräfte auftreten. Allfällige Verformungen der angeschlossenen Rohrleitung aufgrund der so erzeugten Biegemomente können ohne weiteres durch das Tragsystem 30 unterdrückt werden, z.B. durch eine entsprechend hohe Biegesteifigkeit des oben erwähnten Wandlergehäuses 30'.

Die Erfindung beruht dabei auch auf der überraschenden Erkenntnis, daß durch eine geeignete Verformung des Einlaßrohrstücks 11 und des Auslaßrohrstücks 12 unabhängig von momentanen Schwingungsamplituden und/oder -frequenzen des Meßrohrs 10 im oben erwähnten Nutzmode, also durch einen geeigneten Verlauf einer entsprechenden Biegelinie, ein Kraftbelag und ein Momentenbelag entlang Längsachse L innerhalb des Meßaufnehmers so eingestellt werden können, daß den im vibrierenden Meßrohr 10 erzeugten Querimpulsen entgegengerichtete Querimpulse so erzeugt werden können, daß die Querimpulse einander kompensieren und somit in entsprechender Weise auch die durch das vibrierende Meßrohr 10 erzeugten Querkräfte *Q*₁ mittels vom sich verformenden Einlaßrohrstück 11 und vom sich verformenden Auslaßrohrstück 12 erzeugter Querkräfte *Q*₂ im wesentlichen kompensiert werden können.

Nach einer bevorzugten Ausgestaltung der Erfindung ist der Ausleger 15 so geformt und am Meßrohr 10 angebracht, daß dessen Massenschwerpunkt M₁₅ im wesentlichen in einem Bereich einer halben Länge des Einlaßrohrstücks 11 liegt und ist der Ausleger 16 so geformt und am Meßrohr 10 angebracht, das dessen Massenschwerpunkt M₁₆ im wesentlichen in einem Bereich einer halben Länge des Auslaßrohrstücks 12 liegt.

Zum Erzeugen der Trägheitsmomente umfaßt der Ausleger 15, wie in Fig. 1 dargestellt, einen entsprechenden Auslegerarm 15A an den, vom Auslaßende 11^{#} entfernt, eine Auslegermasse 15B angeformt ist; dementsprechend weist der Ausleger 16 einen Auslegerarm 16A mit einer vom Einlaßende 12^{#} entfernt angeformten eine Auslegermasse 16B auf. Die Auslegermassen 15B, 16B sind so bemessen, daß sie auch bei einer lateralen Auslenkung des Meßrohrs 10 und somit auch des Aus- bzw. Einlaßendes 11^{#}, 12^{#} sich zwar ggf. verdrehen können, translatorisch jedoch im wesentlichen in jener statischen Ruhelage verharren, die ihnen jeweils aufgrund der konkreten mechanisch-geometrischen Eigenschaften der Ausleger 15, 16 zugewiesenen sind. In entsprechender Weise verbleiben also auch die jeweiligen Massenschwerpunkte M₁₅, M₁₆ der beiden Auslegers 15, 16, trotzdem das Meßrohr 10 aus seiner zugewiesenen statischen Ruhelage lateral verschoben ist, im wesentlichen ortsfest in einer statischen Ruhelage, sie dienen also als Drehpunkt für die die oben erwähnten Biegemomente erzeugenden Drehbewegungen der Ausleger 15, 16.

Die beiden Ausleger 15, 16 sind bevorzugt, wie auch in den Fig. 1 bis 4, dargestellt, einseitig, also lediglich am Auslaß- bzw. Einlaßende 11^{#}, 12^{#} fixiert gehalten. Zur Unterdrückung allfälliger unerwünschter Schwingungsmoden können ferner, wie in Fig. 4 schematisch dargestellt, jedoch zusätzliche Feder - und/oder Dämpfungselemente vorgesehen sein, die, z.B. jeweils an der Auslegermasse 15B bzw. 16B und am Wandlergehäuse 30' fixiert, die Massenschwerpunkte M₁₅, M₁₆ der Ausleger 15 bzw. 16 in ihrer jeweiligen Ruhelage stabilisieren.

Experimentelle Untersuchungen an Meßwandlern mit oben erwähntem Edelstahl-Meßrohr haben z.B. ergeben, daß jede der, insb. im Vergleich zum Meßrohr 10, möglichst träge gegenüber allfälligen lateralen Verschiebungen auszulegenden Auslegermasse 15B, 16B vorteilhafterweise in etwa fünfmal so groß wie eine Masse des Meßrohrs 10 gewählt werden sollte. Überraschenderweise kann die Dimensionierung der beiden Auslegermassen 15B, 16B und die der Auslegerarme 15A, 16A hierbei aber praktisch unabhängig vom Bereich der im Betrieb zu erwartenden Schwingungsfrequenzen des vibrierenden Meßrohrs 10 erfolgen; es ist lediglich zu gewährleisten, daß die Auslegermassen 15B, 16B möglichst schwer, insb. jeweils scherer als das Meßrohr 10, und die Auslegerarme 15A, 16A, wie bereits angedeutet, möglichst biegesteif ausgeführt sind.

Um ein möglichst widerstandsloses Verdrehen der Auslegermassen zuzulassen sind die Ausleger 15 bzw. 16 ferner bevorzugt so geformt und am Meßrohr 10 fixiert, daß ein Quotient von vorgenanntem Massenträgheitsmoment durch die jeweils zugehörige Auslegermasse 15B bzw. 16B möglichst niedrig ist. Untersuchungen hierzu haben ferner ergeben, daß, z.B. für den Fall, daß das Meßrohr 10 wie oben beschrieben als Edelstahl-Meßrohr ausgeführt ist, die Ausleger 15 bzw. 16 so geformt und am Ein- bzw. am Auslaßrohrstück 11, 12 zu fixieren sind, daß vorgenannter Quotient möglichst kleiner als 10⁻⁴ kg · m² / kg ist. Der Quotient kann z.B. in vorteilhafter Weise dadurch sehr genau eingestellt werden, daß die Auslegermasse 15B bzw. 16B inform gestreckter, in den Fig. 3a bis d und 4 durch ihre jeweiligen Querschnitte symbolisierten, Prismen oder Zylinder ausgeführt und via Auslegerarm 15A bzw. 16A so am Ein- bzw. am Auslaßrohrstück 11, 12 fixiert ist, daß eine jeweilige imaginäre Hauptträgheitsachse für ein zugehöriges minimales Hauptträgheitsmoment der Auslegermasse 15B bzw. 16B parallel zu vorgenannten Drehachsen D₁₅, D₁₆ ausgerichtet ist.

Des weiteren kann vorgenannter Quotient auch dynamisch in Abhängigkeit von den lateralen Verschiebebewegungen *V* des Meßrohrs 10, minimiert werden. Dazu sind die Auslegermassen 15B, 16B nach einer bevorzugten Ausgestaltung der Erfindung zumindest partiell biegeweich, z.B., wie auch in Fig. 1 schematisch dargestellt, mittels eingeformter, im wesentlichen parallel zu den Drehachsen D₁₅, D₁₆ ausgerichteter Nuten, ausgeführt.

Die Ausleger 15, 16 sind ferner bevorzugt so ausgestaltet, daß deren Auslegerarme 15A bzw. 16A eine, bevorzugt mindestens dreimal, höhere Biegesteifigkeit als das Ein- bzw. das Auslaßrohrstück 11, 12 aufweisen. Dazu können die Auslegerarme 15A, 16A z.B., wie bereits auch für den Gegenschwinger 20' beschrieben, rohrförmig ausgeführt sein; des weiteren können sie dann, ggf. mit dem Gegenschwinger 20' fluchtend, ebenfalls koaxial zum Meßrohr 10 ausgerichtet am Ein- bzw. Auslaßrohrstück 11, 12 fixiert sein. Für letzteren Fall können die Auslegerarme 15A, 16A zusammen mit dem Gegenschwinger 20' z.B. auch mittels eines einzigen rohrförmigen Halbzeugs einstückig oder mittels zweier Rohrhälften zweistückig gefertigt werden. Ferner kann vorbeschriebenes Verhältnis der Biegesteifigkeiten z.B. durch ein entsprechend lang ausgeführtes Ein- bzw. Auslaßrohrstück 11, 12 eingestellt werden.

Es hat sich hierbei jedoch überraschenderweise gezeigt, das die Biegemomente für Einlaßrohrstück 11 bzw. Auslaßrohrstück 12 auch mit sich in gewissen Grenzen signifikant elastisch verformenden Auslegerarmen 15A, 16A ausreichend genau erzeugt werden können. Die Auslegermassen 15B, 16B können dann z.B. auch so ausgelegt sein, daß sie, in ihrer zugewiesenen, bevorzugt relativ weit vom Meßrohr 10 entfernten Ruhelage verharrend, praktisch auch keine Verdrehung erfahren. Für den oben erwähnten Fall, daß die Auslegerarme 15A, 16A rohrförmig ausgeführt sind, können diese sowohl zum Einstellen ihrer Biegesteifigkeit als auch zum Einstellen des oben genannten Quotient z.B. längsseits ebenfalls angeschlitzt werden.

Wie sich aus den vorangegangenen Erläuterungen unschwer erkennen läßt, zeichnet sich der erfindungsgemäße Meßwandler durch eine Vielzahl von Einstellmöglichkeiten aus, die es dem Fachmann, insb. auch noch nach einer Spezifikation von äußeren oder inneren Einbaumaßen, ermöglichen, eine Kompensation von im Meßrohr 10 und ggf. im Gegenschwinger 20 betriebsbedingt erzeugten Querkräften mit einer hohen Güte zu erzielen.

## Patentansprüche

1. Meßwandler vom Vibrationstyp für ein in einer Rohrleitung strömendes Fluid, welcher Meßwandler umfaßt:
- ein im Betrieb vibrierendes, im wesentlichen gerades Meßrohr (10) zum Führen des Fluids,
-- wobei das Meßrohr (10) über ein einlaßseitig einmündendes Einlaßrohrstück (11) und über ein auslaßseitig einmündendes Auslaßrohrstück (12) mit der Rohrleitung kommuniziert und
-- wobei das Meßrohr (10), das Einlaßrohrstück (11) und das Auslaßrohrstück (12) in einer statischen Ruhelage zu einer imaginären Längsachse (L) fluchtend ausgerichtet sind;
- einen einlaßseitig und auslaßseitig am Meßrohr (10) fixierten rohrförmigen Gegenschwinger (20'),
-- wobei das Meßrohr zumindest teilweise vom Gegenschwinger (20') ummantelt ist und
-- wobei das Meßrohr (10) und der Gegenschwinger (20') zueinander koaxial ausgerichtet sind;
- einen an einem dem Meßrohr (10) zugewandten Auslaßende (11^{#}) des Einlaßrohrstücks (11) fixierten ersten Ausleger (15) zum Erzeugen von nämliches Einlaßrohrstück (11) elastisch verformenden Biegemomenten;
- einen an einem dem Meßrohr (10) zugewandten Einlaßende (12^{#}) des Auslaßrohrstücks (12) fixierten zweiten Ausleger (16) zum Erzeugen von nämliches Auslaßrohrstück (12) elastisch verformenden Biegemomenten;
- eine Erregeranordnung (40) zum Antreiben des Meßrohrs (10);
- und eine Sensoranordnung (50) zum Erfassen von Schwingungen des Meßrohrs (10);
- wobei das Meßrohr im Betrieb zu Biegeschwingungen angeregt ist, derart, daß aufgrund von mit den Biegeschwingungen einhergehenden Massenbeschleunigungen Querkräfte (Q₁) erzeugt werden, wodurch im Meßwandler lateral ausgerichtete Querimpulse auftreten und
- wobei aufgrund von im Meßwandler auftretenden lateral ausgerichteten Querimpulsen das vibrierende Meßrohr (10) zumindest zeitweise aus der statischen Ruhelage lateral verschoben ist;
- **dadurch gekennzeichnet, daß** der erste Ausleger (15) und der zweite Ausleger (16) ausgestaltet sind, die Biegemomente so zu erzeugen,
-- daß sich das sich verformende Einlaßrohrstück (11) und das sich verformende Auslaßrohrstück (12) im wesentlichen gegenläufig zur lateralen Verschiebung des Meßrohrs (10) verbiegen
-- und daß im sich verformenden Einlaßrohrstück (11) und im sich verformenden Auslaßrohrstück (12) Impulse erzeugt werden, die den im vibrierenden Meßrohr (10) erzeugten Querimpulsen entgegengerichtet sind,
-- wobei der erste Ausleger (15) und der zweite Ausleger (16) so angeordnet sind, daß ein Masseschwerpunkt (M₁₅) des ersten Auslegers (15) im Bereich des Einlaßrohrstücks (11) und ein Massenschwerpunkt (M₁₆) des zweiten Auslegers (16) im Bereich des Auslaßrohrstücks (12) liegen
-- und wobei der Masseschwerpunkt (M₁₅) des ersten Auslegers (15) und der Masseschwerpunkt (M₁₆) des zweiten Auslegers (16), trotzdem das Meßrohr (10) aus seiner zugewiesenen statischen Ruhelage lateral verschoben ist, im wesentlichen ortsfest in einer statischen Ruhelage verbleiben.

2. Meßwandler nach Anspruch 1,
- bei dem der erste Ausleger (15)
-- einen am Einlaßrohrstück (11) starr fixierten Auslegerarm (15A) und
-- eine daran gehalterte Auslegermasse (15B) und
- bei dem der zweite Ausleger (16)
-- einen am Auslaßrohrstück (12) starr fixierten Auslegerarm (16A) und
-- eine daran gehalterte Auslegermasse (16B) aufweisen.

3. Meßwandler nach dem vorherigen Anspruch,
- wobei sowohl die Auslegermasse (15B) des ersten Auslegers (15) als auch die Auslegermasse (16B) des zweiten Auslegers (16) vom Meßrohr (10), vom Einlaßrohrstück (11) und vom Auslaßrohrstück (12) beabstandet sind und
- wobei Auslegerarm (15A) und Auslegermasse (15B) des ersten Auslegers (15) und Auslegerarm (16A) und Auslegermasse (16B) des zweiten Auslegers (16) aufeinander jeweils so abgestimmt sind, daß ein im Bereich des Einlaßrohrstücks (11) liegender Massenschwerpunkt (M₁₅) des ersten Auslegers (15) und ein im Bereich des Auslaßrohrstücks (12) liegender Massenschwerpunkt (M₁₆) des zweiten Auslegers (16), trotzdem das Meßrohr (10) aus seiner zugewiesenen statischen Ruhelage lateral verschoben ist, im wesentlichen ortsfest in einer statischen Ruhelage verbleiben.

4. Meßwandler nach einem der vorherigen Ansprüche, bei dem jeder der beiden Ausleger (15, 16) mindestens so schwer wie das Meßrohr (10) ist.

5. Meßwandler nach einem der vorherigen Ansprüche, bei dem in den Gegenschwinger (20') Nuten eingeformt sind.

6. Meßwandler nach einem der vorherigen Ansprüche, bei dem am Gegenschwinger (20') diskrete, erste und zweite Massenstücke (201, 202) fixiert sind.

7. Meßwandler nach dem vorherigen Anspruch, bei dem die Massenstücke (201, 202) ringförmig am Gegenschwinger (20') und koaxial zu diesem angeordnet sind.

8. Verfahren zum Betreiben eines Meßwandlers vom Vibrationstyp, welcher Meßwandler umfaßt:
- ein im wesentlichen gerades Meßrohr (10) zum Führen eines in einer Rohrleitung strömenden Fluids,
-- wobei das Meßrohr (10) über ein einlaßseitig einmündendes Einlaßrohrstück (11) und über ein auslaßseitig einmündendes Auslaßrohrstück (12) mit der Rohrleitung kommuniziert
-- und wobei das Meßrohr (10), das Einlaßrohrstück (11) und das Auslaßrohrstück (12) in einer statischen Ruhelage zu einer imaginären Längsachse (L) fluchtend ausgerichtet sind;
- einen einlaßseitig und auslaßseitig am Meßrohr (10) fixierten rohrförmigen Gegenschwinger (20'),
-- wobei das Meßrohr zumindest teilweise vom Gegenschwinger (20') ummantelt ist, und
- wobei das Meßrohr (10) und der Gegenschwinger (20') zueinander koaxial ausgerichtet sind,
- einen an einem dem Meßrohr (10) zugewandten Auslaßende (11^{#}) des Einlaßrohrstücks (11) fixierten ersten Ausleger (15),
- einen an einem dem Meßrohr (10) zugewandten Einlaßende (12^{#}) des Auslaßrohrstücks (12) fixierten zweiten Ausleger (16),
- eine Erregeranordnung (40) zum Antreiben des Meßrohrs (10), sowie
- eine Sensoranordnung (50) zum Erfassen von Schwingungen des Meßrohrs (10), welches Verfahren folgende Schritte umfaßt:
- Erzeugen mechanischer Biegeschwingungen des Meßrohrs mittels der Erregeranordnung (40) und Erzeugen von Querkräfte (Q₁) aufgrund von mit den Biegeschwingungen einhergehenden Massenbeschleunigungen zum Bewirken von das vibrierende Meßrohr (10) aus der zugewiesenen statischen Ruhelage lateral verschiebenden Querimpulsen; sowie
- laterales Verschieben des vibrierende Meßrohr (10) aus der zugewiesenen statischen Ruhelage und Erzeugen von das Einlaßrohrstück (11) elastisch verformenden Biegemomenten mittels des ersten Auslegers (15) und Erzeugen von das Auslaßrohrstück (12) elastisch verformenden Biegemomenten mittels des zweiten Auslegers (15), indem der im Bereich des Einlaßrohrstücks (11) liegende Massenschwerpunkt (M₁₅) des ersten Auslegers (15) und der im Bereich des Auslaßrohrstücks (12) liegende Massenschwerpunkt (M₁₆) des zweiten Auslegers (16), trotzdem das Meßrohr (10) aus seiner zugewiesenen statischen Ruhelage lateral verschoben ist, im wesentlichen ortsfest in einer statischen Ruhelage verbleibt, derart daß sich das sich verformende Einlaßrohrstück (11) und das sich verformende Auslaßrohrstück (12) zum Erzeugen von den erzeugten Querimpulsen entgegengerichteten Impulsen im wesentlichen gegenläufig zur lateralen Verschiebung des Meßrohrs (10) verbiegen.

## Claims

1. Vibronic-type transducer for a fluid flowing through a pipe, said transducer comprising:
- a measuring tube (10) that is essentially straight and vibrates during operation, said tube being designed to conduct the fluid,
-- wherein the measuring tube (10) communicates with the pipe via an inlet tube segment (11) which enters into the tube on the inlet side and via an outlet tube segment (12) which enters into the tube on the outlet side, and
-- wherein the measuring tube (10), the inlet tube segment (11) and the outlet tube segment (12) are flush-aligned, in a static resting position, with an imaginary longitudinal axis (L);
- a tubular counter-vibrator (20') fixed on the measuring tube (10) on the inlet side and the outlet side,
-- wherein the measuring tube is at least partially surrounded by the counter-vibrator (20') and
-- wherein the measuring tube (10) and the counter-vibrator (20') are aligned with one another in a coaxial manner;
- a first cantilever (15) fixed on an outlet end (11^{#}) of the inlet tube segment (11), facing towards the measuring tube (10), said cantilever being designed to generate flexural moments elastically deforming said inlet tube segment (11) ;
- a second cantilever (16) fixed on an inlet end (12^{#}) of the outlet tube segment (12), facing towards the measuring tube (10), said cantilever being designed to generate flexural moments elastically deforming said outlet tube segment (12) ;
- an exciter arrangement (40) designed to drive the measuring tube (10);
- and a sensor arrangement (50) designed to measure the vibrations of the measuring tube (10);
- wherein, during operation, the measuring tube is excited to produce flexural vibrations in such a way that transverse forces (Q₁) are generated due to mass accelerations associated with the flexural vibrations, as a result of which transversal pulses aligned laterally occur in the transducer, and
- wherein the vibrating measuring tube (10) is at least temporarily moved laterally out of the static resting position due to laterally aligned transversal pulses occurring in the transducer;
- **characterized in that** the first cantilever (15) and the second cantilever (16) are designed to generate the flexural moments in such a way that
-- the deforming inlet tube segment (11) and the deforming outlet tube segment (12) curve essentially opposite to the lateral shift of the measuring tube (10)
-- and in such a way that pulses are generated in the deforming inlet tube segment (11) and the deforming outlet tube segment (12) which are opposed to transversal pulses generated in the vibrating measuring tube (10),
-- wherein the first cantilever (15) and the second cantilever (16) are arranged in such a way that a center of mass (M₁₅) of the first cantilever is situated in the area of the inlet tube segment (11) and a center of mass (M₁₆) of the second cantilever is situated in the area of the outlet tube segment (12),
-- and wherein the center of mass (M₁₅) of the first cantilever (15) and the center of mass (M₁₆) of the second cantilever (16) remain essentially fixed in a static resting position despite the fact that the measuring tube (10) is laterally moved out of its assigned static resting position.

2. Transducer as claimed in Claim 1,
- wherein the first cantilever (15) has
-- a cantilever arm (15A) rigidly fixed on the inlet tube segment (11), and
-- a cantilever mass (15B) fixed thereupon, and
- wherein the second cantilever (16) has
-- a cantilever arm (16A) rigidly fixed on the outlet tube segment (12), and
-- a cantilever mass (16B) fixed thereupon.

3. Transducer as claimed in the previous claim,
- wherein both the cantilever mass (15B) of the first cantilever (15) and the cantilever mass (16B) of the second cantilever (16) are spaced at a distance from the measuring tube (10), the inlet tube segment (11) and the outlet tube segment (12), and
- wherein the cantilever arm (15A) and the cantilever mass (15B) of the first cantilever (15) and the cantilever arm (16A) and the cantilever mass (16B) of the second cantilever (16) are coordinated with one another in such a way that a center of mass (M₁₅) of the first cantilever (15), located in the area of the inlet tube segment (11), and a center of mass (M₁₆) of the second cantilever (16), located in the area of the outlet tube segment (12) remain essentially stationary in a static resting position despite the fact that the measuring tube (10) is moved laterally out of its assigned static resting position.

4. Transducer as claimed in one of the previous claims, wherein each of the two cantilevers (15, 16) is at least as heavy as the measuring tube (10).

5. Transducer as claimed in one of the previous claims, wherein grooves are formed in the counter-vibrator (20').

6. Transducer as claimed in the previous claim, wherein first and a second discrete mass elements (201, 202) are fixed on said counter-vibrator (20').

7. Transducer as claimed in one of the previous claims, wherein the mass elements (201, 202) are arranged annularly on the counter-vibrator (20') and coaxially in relation to the counter-vibrator.

8. Procedure to operate a vibronic-type transducer, said transducer comprising:
- a measuring tube (10) that is essentially straight and designed to conduct a fluid flowing through a pipe,
-- wherein the measuring tube (10) communicates with the pipe via an inlet tube segment (11) that enters into the tube on the inlet side and via an outlet tube segment (12) that enters into the tube on the outlet side
-- and wherein the measuring tube (10), the inlet tube segment (11) and the outlet tube segment (12) are flush-aligned, in a static resting position, with an imaginary longitudinal axis (L);
- a tubular counter-vibrator (20'), fixed on the measuring tube (10) on the inlet and outlet side,
-- wherein the measuring tube is at least partially surrounded by the counter-vibrator (20'), and
-- wherein the measuring tube (10) and the counter-vibrator (20') are coaxially aligned in relation to one another,
- a first cantilever (15) fixed on an outlet end (11^{#}) of the inlet tube segment (11), facing towards the measuring tube (10),
- a second cantilever (16) fixed on an inlet end (12^{#}) of the outlet tube segment (12), facing towards the measuring tube (10),
- an exciter arrangement (40) to drive the measuring tube (10), and
- a sensor arrangement (50) designed to measure vibrations of the measuring tube (10), said procedure comprising the following steps:
- Generation of mechanical flexural vibrations of the measuring tube by means of the exciter arrangement (40) and generation of transverse forces (Q₁) due to mass accelerations associated with the flexural vibrations for the purpose of producing transversal pulses that laterally move the vibrating measuring tube (10) out of the assigned static resting position, and
- Lateral shifting of the vibrating measuring tube (10) from the assigned static resting position and generation of flexural moments elastically deforming the inlet tube segment (11) using the first cantilever (15) and generation of flexural moments elastically deforming the outlet tube segment (12) using the second cantilever (16), in that the center of mass (M₁₅) of the first cantilever (15) located in the area of the inlet tube segment (11) and the center of mass (M₁₆) of the second cantilever (16) located in the area of the outlet tube segment (12) remain essentially stationary in a static resting position despite the fact that the measuring tube (10) is moved laterally out of its assigned static resting position, in such a way that the deforming inlet tube segment (11) and the deforming outlet tube segment (12) curve essentially in the opposite direction to the lateral shift in the measuring tube (10) for the purpose of generating pulses that are opposed to the generated transversal pulses.

## Revendications

1. Transducteur du type à vibrations pour un fluide s'écoulant dans une conduite, lequel transducteur comprend :
- un tube de mesure (10) pour l'essentiel droit, vibrant en fonctionnement, destiné à guider le fluide,
-- le tube de mesure (10) communiquant avec la conduite via un segment de tube d'entrée (11) débouchant côté entrée et via un segment de tube de sortie (12) débouchant côté sortie, et
-- le tube de mesure (10), le segment de tube d'entrée (11) et le segment de tube de sortie (12) étant alignés, dans une position de repos statique, de façon affleurante par rapport à un axe longitudinal imaginaire (L) ;
- un contre-vibrateur (20') tubulaire, fixé côté entrée et côté sortie sur le tube de mesure (10),
-- le tube de mesure étant entouré au moins partiellement par le contre-vibrateur (20') et
-- le tube de mesure (10) et le contre-vibrateur (20') étant alignés de façon coaxiale l'un par rapport à l'autre ;
- un premier cantilever (15) fixé sur une extrémité de sortie (11^{#}) du segment de tube d'entrée (11), faisant face au tube de mesure (10), lequel cantilever est destiné à générer des moments de flexion déformant élastiquement le dit segment de tube d'entrée (11) ;
- un deuxième cantilever (16) fixé sur une extrémité d'entrée (12^{#}) du segment de tube de sortie (12), faisant face au tube de mesure (10), lequel cantilever est destiné à générer des moments de flexion déformant élastiquement le dit segment de tube de sortie (12) ;
- un dispositif excitateur (40) destiné à la mise en vibrations du tube de mesure (10) ;
- et un dispositif capteur (50) destiné à la mesure des vibrations du tube de mesure (10) ;
- le tube de mesure étant excité, pendant le fonctionnement, en vibrations de flexion, de telle sorte que des forces transversales (Q₁) sont générées en raison des accélérations de masse accompagnant les vibrations de flexion, ce par quoi des impulsions transversales alignées latéralement dans le transducteur apparaissent, et
- le tube de mesure (10) vibrant étant au moins temporairement décalé latéralement de la position de repos statique en raison d'impulsions transversales alignées latéralement se produisant dans le transducteur ;
- **caractérisé en ce que** le premier cantilever (15) et le deuxième cantilever (16) sont conçus pour générer les moments de flexion de telle sorte
-- que le segment de tube d'entrée (11) qui se déforme et le segment de tube de sortie (12) qui se déforme se courbent pour l'essentiel dans le sens opposé au décalage latéral du tube de mesure (10)
-- et de telle sorte que sont générées, dans le segment de tube d'entrée (11) qui se déforme et le segment de tube de sortie (12) qui se déforme, des impulsions qui s'opposent aux impulsions transversales générées,
-- le premier cantilever (15) et le deuxième cantilever (16) étant disposés de telle sorte qu'un centre de gravité de masse (M₁₅) du premier cantilever se situe dans la zone du segment de tube d'entrée (11) et un centre de gravité de masse (M₁₆) du deuxième cantilever se situe dans la zone du segment de tube de sortie (12),
-- et le centre de gravité de masse (M₁₅) et le deuxième centre de gravité de masse (M₁₆), malgré le fait que le tube de mesure (10) est décalé latéralement de sa position de repos statique attribuée, restent pour l'essentiel fixes dans une position de repos statique.

2. Transducteur selon la revendication 1,
- pour lequel le premier cantilever (15) comporte
-- un bras de cantilever (15A) fixé de façon rigide sur le segment de tube d'entrée (11), et
-- une masse de cantilever (15B) qui y est fixée, et
- pour lequel le deuxième cantilever (16) comporte
-- un bras de cantilever (16A) fixé de façon rigide sur le segment de tube de sortie (12), et
-- une masse de cantilever (16B) qui y est fixée.

3. Transducteur selon la revendication précédente,
- pour lequel aussi bien la masse de cantilever (15B) du premier cantilever (15) que la masse de cantilever (16B) du deuxième cantilever (16) sont espacées du tube de mesure (10), du segment de tube d'entrée (11) et du segment de tube de sortie (12), et
- pour lequel le bras de cantilever (15A) et la masse de cantilever (15B) du premier cantilever (15) et le bras de cantilever (16A) et la masse de cantilever (16B) du deuxième cantilever (16) sont assortis les uns aux autres de telle sorte qu'un centre de gravité de masse (M₁₅) du premier cantilever, situé dans la zone du segment de tube d'entrée (11), et un centre de gravité de masse (M₁₆) du deuxième cantilever, situé dans la zone du segment de tube de sortie (12), malgré le fait que le tube de mesure (10) est décalé latéralement de sa position de repos statique attribuée, restent pour l'essentiel fixes dans une position de repos statique.

4. Transducteur selon l'une des revendications précédentes, pour lequel chacun des deux cantilevers (15, 16) est au moins aussi lourd que le tube de mesure (10).

5. Transducteur selon l'une des revendications précédentes, pour lequel des rainures sont formées dans le contre-vibrateur (20').

6. Transducteur selon l'une des revendications précédentes, pour lequel un premier et un deuxième élément de masse (201, 202) discrets sont fixés sur le contre-vibrateur (20').

7. Transducteur selon l'une des revendications précédentes, pour lequel les éléments de masse (201, 202) sont disposés de façon annulaire sur le contre-vibrateur (20') et de manière coaxiale par rapport à ce dernier.

8. Procédé destiné à l'exploitation d'un transducteur du type à vibrations, lequel transducteur comprend :
- un tube de mesure (10) pour l'essentiel droit, destiné à guider un fluide s'écoulant dans une conduite,
-- le tube de mesure (10) communiquant avec la conduite via un segment de tube d'entrée (11) débouchant côté entrée et via un segment de tube de sortie (12) débouchant côté sortie
-- et le tube de mesure (10), le segment de tube d'entrée (11) et le segment de tube de sortie (12) étant alignés, dans une position de repos statique, de façon affleurante par rapport à un axe longitudinal imaginaire (L) ;
- un contre-vibrateur (20') tubulaire, fixé côté entrée et côté sortie sur le tube de mesure (10),
-- le tube de mesure étant entouré au moins partiellement par le contre-vibrateur (20'), et
-- le tube de mesure (10) et le contre-vibrateur (20') étant alignés de manière coaxiale l'un par rapport à l'autre,
- un premier cantilever (15) fixé sur une extrémité de sortie (11^{#}) du segment de tube d'entrée (11), faisant face au tube de mesure (10),
- un deuxième cantilever (16) fixé sur une extrémité d'entrée (12^{#}) du segment de tube de sortie (12), faisant face au tube de mesure (10),
- un dispositif excitateur (40) destiné à la mise en vibrations du tube de mesure (10), ainsi que
- un dispositif capteur (50) destiné à la mesure des vibrations du tube de mesure (10), lequel procédé comprend les étapes suivantes :
- Génération de vibrations de flexion mécaniques du tube de mesure au moyen du dispositif excitateur (40) et génération de forces transversales (Q₁) dues aux accélérations de masse accompagnant les vibrations de flexion en vue de provoquer des impulsions transversales décalant latéralement le tube de mesure (10) vibrant à partir de la position de repos statique attribuée, ainsi que
- Décalage latéral du tube de mesure (10) vibrant à partir de la position de repos statique attribuée et génération de moments de flexion déformant élastiquement le segment de tube d'entrée (11) au moyen du premier cantilever (15) et génération de moments de flexion déformant élastiquement le segment de tube de sortie (12) au moyen du deuxième cantilever (16), en ce que le centre de gravité de masse (M₁₅) du premier cantilever (15) se trouvant dans la zone du segment de tube d'entrée (11) et le centre de gravité de masse (M₁₆) du deuxième cantilever (16) se trouvant dans la zone du segment de tube de sortie (12), malgré le fait que le tube de mesure (10) est décalé latéralement par rapport à sa position de repos statique attribuée, restent pour l'essentiel fixes dans une position de repos statique, de telle sorte que le segment de tube d'entrée (11) qui se déforme et le segment de tube de sortie (12) qui se déforme se courbent pour l'essentiel dans la direction opposée au décalage latéral du tube de mesure (10), afin de générer des impulsions qui s'opposent aux impulsions transversales générées.
